# FASCICULE DE BREVET EUROPEEN

(11) **EP 0 594 532 B1**
(45) Date de publication et mention de la délivrance du brevet: **02.04.1997**
(21) Numéro de dépôt: 93810408.0
(22) Date de dépôt: 08.06.1993
(51) Int. Cl.: B21D 5/02, G01B 5/24

(54) **Dispositif de mesure de l'angle de pliage d'une tôle**
Vorrichtung zum Messen des Biegewinkels eines Bleches
Device for measuring the angle of bend of a sheet

(30) Priorité: 20.10.1992 CH 3250/92
(43) Date de publication de la demande: 27.04.1994
(73) Titulaire: Beyeler Machines S.A., CH-1030 Bussigny (Lausanne) (CH)
(72) Inventeur: Gerritsen, Gerrit, CH-1303 Penthaz (CH)
(74) Mandataire: Hranitzky, Wilhelm Max

(56) Documents cités:
- EP-A- 0 155 228
- EP-A- 0 333 654
- DE-A- 2 044 199
- DE-U- 9 112 094
- FR-A- 2 362 722
- FR-A- 2 379 046
- PATENT ABSTRACTS OF JAPAN vol. 010, no. 322 (P-511)31 Octobre 1986 & JP-A-61 129 522 (HITACHI LTD) 17 Juin 1986

## Description

La présente invention concerne un dispositif de mesure de l'angle de pliage d'une tôle pour une presse comportant un poinçon avec une arête de pliage et une matrice présentant deux bords de pliage de part et d'autre d'une rainure, ce dispositif de mesure comportant un organe de mesure rotatif, dont la section transversale présente une portion de périphérie circulaire, le centre de laquelle est situé sur l'axe de rotation de l'organe de mesure, et une portion de périphérie linéaire, plus courte que le diamètre de ladite portion de périphérie circulaire (voir par exemple EP-A-0 155 228).

La mesure de l'angle de pliage d'une tôle sur la presse de pliage est d'une grande importance, puisque cet angle est influencé par un certain nombre de facteurs difficilement contrôlables, inhérents à l'opération de pliage. Il s'agit notamment des différences dans la course effective de l'arête du poinçon par rapport à la matrice, les déformations et l'usure de ces outils, les variations d'épaisseurs de la tôle et les différences dans les propriétés de la tôle, telles que sa résistance au pliage et son module d'élasticité.

L'invention a pour but de fournir un dispositif permettant une mesure très précise de l'angle de pliage et notamment une mesure instantanée au cours de l'opération de pliage, et étant par ailleurs robuste de par sa structure, fiable dans son fonctionnement, aisément adaptable à différents outils et relativement économique quant à son prix de revient et son à entretien.

A cet effet, le dispositif selon l'invention est caractérisé en ce que l'organe de mesure a la forme d'un disque plan de faible épaisseur par rapport à ses dimensions dans son plan, ce disque étant monté dans un support de façon à pouvoir tourner sur un angle limité, le support du disque comportant des moyens pour détecter la position angulaire du disque et pour fournir un signal de mesure, électrique, optique ou pneumatique, le dispositif comportant en outre une partie de matrice présentant deux bords de pliage de part et d'autre d'une rainure, la rainure et un des bords de pliage comportant une fente transversale pour le passage du disque de mesure, ledit support du disque étant logé dans la partie de matrice de façon à pouvoir effectuer un mouvement de translation entre une position dans laquelle une partie centrale de la portion de périphérie linéaire du disque se trouve à l'intérieur de ladite fente, au voisinage du bord de pliage, et une position dans laquelle cette partie centrale se trouve à l'extérieur de la fente, l'agencement étant tel que la portion linéaire de la périphérie du disque de mesure soit amené à s'appliquer contre une portion de tôle posée sur les bords de la rainure de la partie de matrice, de sorte que la position angulaire du disque représente l'angle de pliage instantané de la tôle.

Selon une forme d'exécution particulière de ce dispositif, le support du disque de mesure et la partie de la matrice sont agencés pour permettre un déplacement linéaire du support dans une direction inclinée par rapport à un plan commun à des portions des deux bords de pliage.

Le support du disque de mesure est, de préférence, soumis à l'action de moyens de rappel tendant à l'amener dans une position de repos dans laquelle ladite partie centrale de la portion de périphérie linéaire du disque se trouve à l'intérieur de la fente, et en ce que des moyens d'actionnement sont agencés pour tendre à amener ladite partie centrale à l'extérieur de la fente lors de la mesure.

Une partie de la portion de périphérie circulaire du disque de mesure peut présenter une denture en prise avec un pignon logé dans le support du disque et couplé avec un détecteur de sa position angulaire, ledit pignon étant soumis à l'action d'un ressort de rappel tendant à faire tourner le disque de mesure dans une position dans laquelle la portion linéaire de sa périphérie sort de la fente de la rainure de la partie de matrice.

La partie de matrice est, de préférence, munie de moyens pour souffler de l'air le long des bords de la fente dans laquelle passe le disque de mesure de part et d'autre de celui-ci.

Une presse pour le pliage de tôle utilisant le dispositif de mesure selon l'invention peut comporter au moins deux de ces dispositifs de mesure disposés à des endroits espacés le long de la matrice de la presse, de telle façon que la rainure des parties de matrice des dispositifs de mesure se situent dans le prolongement de la rainure de la matrice de la presse.

D'autres caractéristiques, buts et avantages de l'invention apparaîtront plus clairement à la lumière de la description d'une forme d'exécution d'un dispositif de mesure, donnée ci-après à titre d'exemple et illustrée par les dessins annexés dans lesquels:
La Fig. 1 est une vue latérale d'un dispositif de mesure selon l'invention; et
La Fig. 2 est une vue agrandie, partiellement en coupe, du disque de mesure et de son support faisant partie du dispositif selon la Fig. 1.

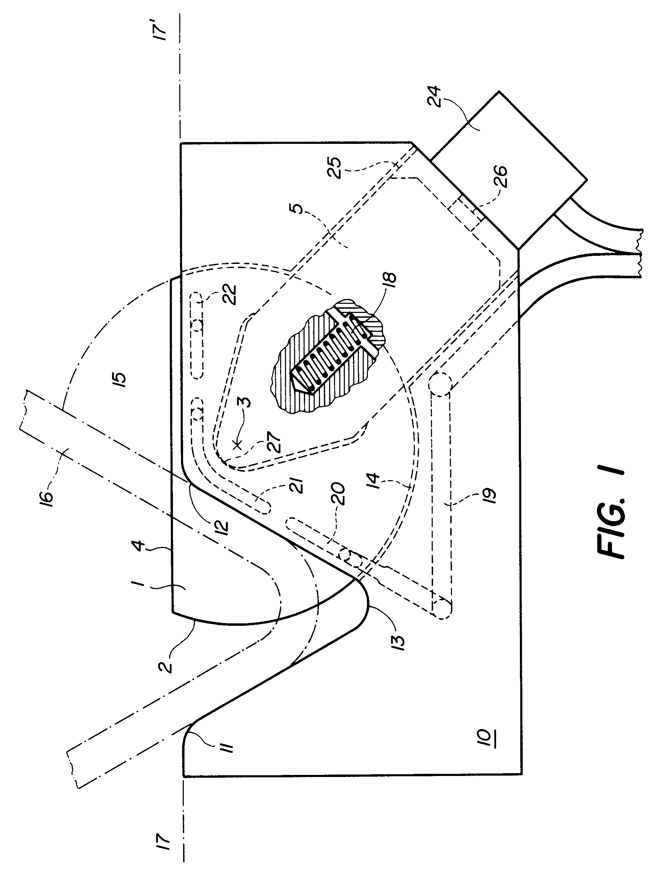

Le dispositif de mesure représenté à la Fig. 1 comporte un disque de mesure 1, monté de façon rotative autour d'un axe 3 dans un support 5 indiqué en traits pointillés, ce support étant lui-même logé dans une partie de matrice 10. Le disque de mesure présente une portion de périphérie circulaire 2, dont le centre est situé sur l'axe de rotation 3, ainsi qu'une portion de périphérie linéaire 4 qui est plus courte que le diamètre de la portion de périphérie circulaire.

La partie de matrice 10 comporte une rainure 13, par exemple en forme de V, dont le profil correspond à celui de la matrice d'une presse pour le pliage de tôles. La partie de matrice 10 présente, de part et d'autre de la rainure 13, des surfaces d'appui planes situées dans un plan commun 17, 17'.

Dans une presse de pliage de tôles, le dispositif de mesure est intercalé dans la matrice de la presse, par exemple en trois endroits répartis sur la longueur de cette matrice, tels que les extrémités et le centre, de façon que le plan 17, 17' et la rainure 13 se situent dans le prolongement des parties correspondantes des portions de matrice de la presse entre lesquelles est disposée la partie 10 du dispositif de mesure.

Lors d'une opération de pliage, la tôle à plier est posée sur la matrice, c.à.d. sur le plan 17, 17', puis un poinçon est abaissé en direction de la rainure 13 pour plier la tôle en forme de V, comme indiqué à titre d'exemple dans la Fig. 1, par la portion de tôle 16 représentée en traits mixtes. Le pliage s'effectue de la façon habituelle entre l'arête du poinçon non représenté et les bords de la matrice alignés avec les bords 11 et 12 de la rainure 13.

Le support du disque de mesure est logé, de façon déplaçable dans une direction inclinée par rapport au plan 17, 17', dans un logement 25 de la partie de matrice 10. A l'état de repos, le support 5 est amené, par des moyens de rappel 18, dans une position définie par une butée 26. Avant la mesure de l'angle de pliage, le support 5 est déplacé en direction de la rainure 13 par un dispositif d'actionnement 24 constitué, par exemple, par un vérin pneumatique. La position extrême dans cette direction est définie par une butée 27 formant l'extrémité du logement 25.

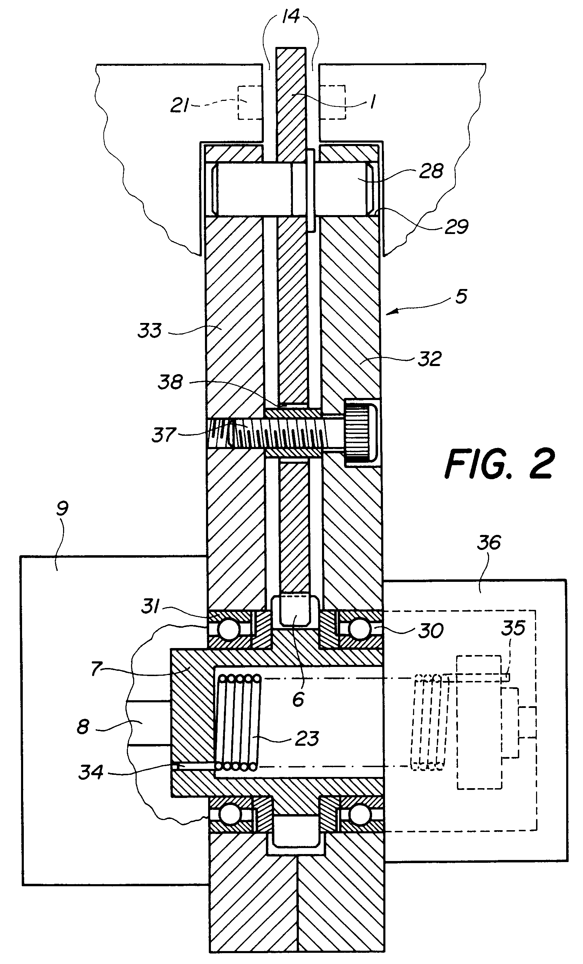

Comme on le voit sur la Fig. 2, qui représente essentiellement le support 5 du disque de mesure 1, ce disque est monté sur un axe 28 logé en 29 dans le support 5. La partie périphérique circulaire du disque présente, sur une longueur appropriée, une denture 6 qui est en prise avec un pignon 7 monté de façon rotative dans le support 5 au moyen de paliers 30, 31 fixés, selon cette forme d'exécution, dans deux parties 32, 33 du support 5. Un ressort hélicoïdal 23 est logé dans une creusure du pignon 7, les extrémités 34 et 35 de ce ressort étant fixées, respectivement, au pignon 7 et à une partie 36, solidaire de la partie 32, du support 5.

Un potentiomètre électrique 9 à balai rotatif est actionné par un axe 8, solidaire du pignon 7. Ainsi, la position angulaire du disque 1 par rapport au support 5 est représentée par la position angulaire du balai du potentiomètre 9 et peut être saisie sous forme d'un signal électrique dans un dispositif usuel de mesure connecté par des conducteurs non-représentés au potentiomètre 9. Il est à noter que dans l'exemple représenté, l'angle de rotation du balai du potentiomètre 9 est multiplié par rapport à l'angle de rotation du disque 1, selon le rapport des diamètres des parties dentées du disque 1 et du pignon 7.

Sur la Fig. 2, on voit schématiquement un moyen pour limiter l'angle de rotation du disque 1 par rapport au support 5 dans les deux sens, ce moyen étant constitué par une vis 37 traversant une fente 38 en forme d'arc, ménagée dans le disque 1.

Lorsqu'une tôle à plier est posée sur la surface d'appui de la matrice de la presse, la surface inférieure de la tôle correspondant alors au plan 17, 17', le dispositif d'actionnement pneumatique 24 est enclenché pour déplacer le support 5 de sa position de repos vers une position dans laquelle la partie centrale 15 de la portion de périphérie linéaire du disque 1 tend à sortir de la fente 14 de la partie de matrice 10. La position représentée à la Fig. 1 constitue la position extrême que le disque prendrait en l'absence d'une tôle sur la surface d'appui de la matrice. En présence d'une tôle plane, la portion 4 vient s'appliquer contre la surface inférieure de celle-ci, et se situera donc également dans le plan 17, 17'. Lorsque le poinçon de la presse déforme la tôle en la faisant pénétrer dans la rainure 13 de la partie de matrice 10, le disque de mesure 1 est amené à pivoter autour de son axe 3, la portion 4 restant en contact avec la surface extérieure de la tôle. Il est à remarquer que le ressort de rappel 23 évite un éventuel jeu entre les dentures du disque 1 et du pignon 7. A la fin de l'opération de pliage, le dispositif d'actionnement 24 est coupé et le ressort de rappel 18 ramène le support 5 avec le disque 1 dans sa position de repos. Le ressort de rappel 23 ramène le disque 1 également dans sa position de repos angulaire qui correspond à la position angulaire représentée en traits pleins à la Fig. 1.

Sur la Fig. 1 sont indiqués, en traits pointillés, des rainures 20, 21 et 22 ménagées à proximité des bords de la partie de matrice 10 constituant la fente 14, de part et d'autre du disque 1. Ces rainures sont alimentées en air comprimé par l'intermédiaire d'une conduite d'amenée 19 et provoquent, d'une part, un nettoyage de la fente 14 et, d'autre part, un centrage du disque 1 dans cette fente.

Il ressort de ce qui précède que le présent dispositif de mesure peut être réalisé d'une façon relativement simple et permet d'atteindre un haut degré de fiabilité et de précision. Par une adaptation de la forme de la rainure 13 de la partie de matrice, il peut être appliqué aisément à différentes matrices de presses de pliage. L'homme de métier reconnaîtra aisément que la grande précision de la mesure de ce dispositif ne sera pas affectée par les conditions de travail régnant sur une presse de pliage et ne demandera qu'un minimum de surveillance et d'entretien.

## Revendications

1. Dispositif de mesure de l'angle de pliage d'une tôle pour une presse comportant un poinçon avec une arête de pliage et une matrice présentant deux bords de pliage de part et d'autre d'une rainure, ce dispositif de mesure comportant un organe de mesure rotatif (1), dont la section transversale présente une portion de périphérie circulaire (2) le centre de laquelle est situé sur l'axe de rotation (3) de l'organe de mesure, et une portion de périphérie linéaire (4), plus courte que le diamètre de ladite portion de périphérie circulaire, caractérisé en ce que l'organe de mesure (1) a la forme d'un disque plan de faible épaisseur par rapport à ses dimensions dans son plan, ce disque étant monté dans un support (5) de façon à pouvoir tourner sur un angle limité, le support (5) du disque comportant des moyens (6-9) pour détecter la position angulaire du disque et pour fournir un signal de mesure, électrique, optique ou pneumatique, le dispositif comportant en outre une partie de matrice (10) présentant deux bords de pliage (11,12) de part et d'autre d'une rainure (13), la rainure (13) et un des bords de pliage (12) comportant une fente transversale (14) pour le passage du disque de mesure, ledit support du disque (5) étant logé dans la partie de matrice (10) de façon à pouvoir effectuer un mouvement de translation entre une position dans laquelle une partie centrale (15) de la portion de périphérie linéaire du disque se trouve à l'intérieur de ladite fente (14), au voisinage du bord de pliage, et une position dans laquelle cette partie centrale (15) se trouve à l'extérieur de la fente (14), l'agencement étant tel que la portion linéaire de la périphérie du disque de mesure soit amené à s'appliquer contre une portion de tôle (16) posée sur les bords de la rainure (13) de la partie de matrice (10), de sorte que la position angulaire du disque représente l'angle de pliage instantané de la tôle (16).

2. Dispositif de mesure selon la revendication 1, caractérisé en ce que le support (5) du disque de mesure et la partie de matrice (10) sont agencés pour permettre un déplacement linéaire du support dans une direction inclinée par rapport à un plan commun (17,17') à des portions des deux bords de pliage.

3. Dispositif de mesure selon la revendication 2, caractérisé en ce que le support (5) du disque de mesure est soumis à l'action de moyens de rappel (18) tendant à l'amener dans une position dans laquelle ladite partie centrale de la portion de périphérie linéaire du disque se trouve à l'intérieur de la fente (14) et en ce que des moyens d'actionnement (24) sont agencés pour tendre à amener ladite partie centrale à l'extérieur de la fente lors de la mesure.

4. Dispositif de mesure selon l'une des revendications précédentes, caractérisé en ce qu'une partie de la portion de périphérie circulaire (2) du disque de mesure présente une denture (6) en prise avec un pignon (7) logé dans le support du disque et couplé avec un détecteur (9) de sa position angulaire, ledit pignon étant soumis à l'action d'un ressort de rappel (23) tendant à faire tourner le disque de mesure (1) dans une position dans laquelle la portion linéaire de sa périphérie sort de la fente de la rainure (13) de la partie de matrice.

5. Dispositif de mesure selon l'une des revendications précédentes, caractérisé en ce que la partie de matrice (10) est munie de moyens (19-22) pour souffler de l'air le long des bords de la fente dans laquelle passe le disque de mesure (1), de part et d'autre de celui-ci.

6. Presse pour le pliage de tôles utilisant le dispositif de mesure selon la revendication 1, caractérisée en ce qu'elle comporte au moins deux de ces dispositifs de mesure disposés à des endroits espacés le long de la matrice de la presse, de telle façon que la rainure des parties de matrice des dispositifs de mesure se situe dans le prolongement de la rainure de la matrice de la presse.

## Claims

1. Measuring device for the bend angle of a metal sheet for a press brake comprising a bending edge and a die having two bending edges on both sides of a groove, this measuring device comprising a rotatory measuring member (1) the cross-section of which has a circular peripheral part (2) the center of which is located on the axis of rotation (3) of the measuring member, and a linear peripheral part (4) which is shorter than the diameter of said circular peripheral part, characterized in that the measuring member (1) has the shape of a flat disc of small thickness as compared to its dimensions in its plane, this disc being mounted for rotation over a limited angle in a disc support (5), the disc support (5) comprising means (6 - 9) for sensing the angular position of the disc and for providing an electrical, optical or pneumatical measuring signal, the device further comprising a die part (10) having two bending edges (11, 12) on either side of a groove (13), the groove (13) and one of the bending edges (12) comprising a transverse slot (14) for the passing through of the measuring disc, said disc support (5) being lodged in a part of the die (10) so as to be capable of effecting a translatory movement between a position in which a central portion (15) of the linear peripheral part of the disc is inside said slot (14) in the vicinity of the bending edge, and a position in which this central portion (15) is outside of the slot (14), the arrangement being such that the linear part of the periphery of the measuring disc is brought to apply on a sheet metal portion (16) placed on the edges of the groove (13) of the die part (10) so that the angular position of the disc represents the instantaneous bend angle of the metal sheet (16).

2. Measuring device according to claim 1, characterized in that the support (5) of the measuring disc and the die part (10) are arranged for permitting a linear shifting of the support in a direction inclined with respect to a plane (17, 17') which is common to portions of the two bending edges.

3. Measuring device according to claim 2, characterized in that the support (5) of the measuring disc is subjected to the action of return means (18) tending to bring the same into a position in which said central portion of the linear peripheral part of the disc is inside the slot (14) and in that actuating means (24) are arranged for tending to bring said central portion to the outside of the slot when the measuring takes place.

4. Measuring device according to one of the preceding claims, characterized in that a part of the circular peripheral part (2) of the measuring disc has teeth (6) engaged with a pinion (7) mounted in the disc support and coupled with a sensor (9) of its angular position, said pinion being subjected to the action of a return spring (23) tending to rotate the measuring disc (1) into a position in which the linear part of its periphery extends outside of the slot in the groove (13) of the die part.

5. Measuring device according to one of the preceding claims, characterized in that the die part (10) is provided with means (19 - 22) for blowing air along the edges of the slot through which passes the measuring disc (1) on both sides of the same.

6. Press brake for bending sheet metal using the measuring device according to claim 1, characterized in that it comprises at least two of these measuring devices arranged in spaced positions along the die of the press so that the groove of the die parts of the measuring devices is in alignment with the groove of the die of the press.

## Patentansprüche

1. Vorrichtung zum Messen des Biegewinkeis eines Bleches für eine Presse, die einen Stempel mit einer Biegekante und eine Matrize mit zwei Biegekanten zu beiden Seiten einer Nut aufweist, wobei diese Messvorrichtung ein drehbares Messelement (1) enthält, dessen Querschnitt ein kreisförmiges Umfangsstück (2) aufweist, dessen Zentrum auf der Drehachse (3) des Messelements liegt, und ein geradliniges Umfangsstück (4), das kürzer ist als der Durchmesser des genannten kreisförmigen Umfangsstücks, dadurch gekennzeichnet, dass das Messelement (1) die Form einer ebenen Scheibe besitzt, deren Dicke klein ist im Vergleich zu ihren Abmessungen in ihrer Ebene, wobei diese Scheibe in einem Träger (5) so montiert ist, dass sie über einen begrenzten Winkel drehbar ist, wobei der Träger (5) der Scheibe Mittel (6 - 9) aufweist, um die Winkelstellung der Scheibe zu erfassen und um ein elektrisches, optisches oder pneumatisches Meßsignal zu liefern, wobei die Vorrichtung ferner ein Matrizenteil (10) aufweist, das zwei Biegekanten (11, 12) zu beiden Seiten einer Nut (13) besitzt, wobei die Nut (13) und eine der Biegekanten (12) einen quer verlaufenden Einschnitt (14) für den Durchgang der Meßscheibe besitzen und der genannte Träger (5) der Scheibe in einem Matrizenteil (10) angeordnet ist, derart, dass er eine translatorische Bewegung zwischen einer Stellung, in der ein zentraler Teil (15) des geradlinigen Umfangsstücks der Scheibe sich im Innern des genannten Einschnitts (14) in der Umgebung der Biegekante befindet, und einer Stellung, in der dieser zentrale Teil (15) sich ausserhalb des Einschnitts (14) befindet, ausführen kann, wobei die Anordnung derart getroffen ist, dass das geradlinige Umfangsstück der Meßscheibe dazu gebracht wird, sich an einen Teil des Bleches (16), das auf die Kanten der Nut (13) des Matrizenteils (10) gelegt ist, anzulegen, so dass die Winkelstellung der Scheibe den augenblicklichen Biegewinkel des Bleches (16) darstellt.

2. Messvorrichtung nach Patentanspruch 1, dadurch gekennzeichnet, dass der Träger (5) der Meßscheibe und der Matrizenteil (10) so ausgebildet sind, dass sie eine geradlinige Bewegung des Trägers in einer Richtung erlauben, die zu einer Ebene (17, 17'), die Stücken der beiden Biegekanten gemeinsam ist, geneigt ist.

3. Messvorrichtung nach Patentanspruch 2, dadurch gekennzeichnet, dass der Träger (5) der Meßscheibe unter der Wirkung von Rückstellmitteln (18) steht, die darauf hinwirken, ihn in eine Stellung zurückzubringen, in der der genannte zentrale Teil des geradlinigen Umfangsstücks der Scheibe sich im Inneren des Einschnitts (14) befindet, und dass Betätigungsmittel (24) so ausgebildet sind, dass sie darauf hinwirken, den genannten zentralen Teil während der Messung aus dem Einschnitt heraus zu bewegen.

4. Messvorrichtung nach einem der vorhergehenden Patentansprüche, dadurch gekennzeichnet, dass ein Teil des kreisförmigen Umfangsstücks (2) der Meßscheibe eine Zahnung (6) aufweist, die mit einem Ritzel (7) in Eingriff steht, welches im Träger der Scheibe angeordnet ist und mit einem Sensor (9) seiner Winkelstellung gekoppelt ist, wobei das genannte Ritzel der Wirkung einer Rückstellfeder (23) unterworfen ist, die darauf hinwirkt, die Meßscheibe (1) in eine Stellung zu drehen, in der das geradlinige Stück ihres Umfangs aus dem Einschnitt der Nut (13) des Matrizenteils herausragt.

5. Messvorrichtung nach einem der vorhergehenden Patentansprüche, dadurch gekennzeichnet, dass der Matrizenteil (10) mit Mitteln (19 - 22) versehen ist, um Luft entlang der Kanten des Einschnitts, durch den die Meßscheibe (1) hindurchgeht, zu beiden Seiten derselben zu blasen.

6. Blechbiegepresse, die die Meßvorrichtung gemäss Patentanspruch 1 verwendet, dadurch gekennzeichnet, dass sie mindestens zwei dieser Messvorrichtungen aufweist, die in Abständen entlang der Matrize der Presse so angeordnet sind, dass die Nut der Matrizenteile der Messvorrichtungen in der Verlängerung der Nut der Matrize der Presse liegt.
